Europäisches Patentamt

European Patent Office

Office européen des brevets

(19)

(11) Veröffentlichungsnummer: **0 134 013**
**B1**

(12) **EUROPÄISCHE PATENTSCHRIFT**

(45) Veröffentlichungstag der Patentschrift: **24.10.90**

(51) Int. Cl.⁵: **A 01 J 25/16**

(21) Anmeldenummer: **84109351.1**

(22) Anmeldetag: **07.08.84**

(54) **Vorrichtung zum Behandeln von Käsestücken mittels Luft.**

(30) Priorität: **08.08.83 DE 3328589**

(43) Veröffentlichungstag der Anmeldung:
**13.03.85 Patentblatt 85/11**

(45) Bekanntmachung des Hinweises auf die
Patenterteilung:
**24.10.90 Patentblatt 90/43**

(84) Benannte Vertragsstaaten:
**AT CH FR GB IT LI**

(56) Entgegenhaltungen:
**DE-A-2 138 356**
**DE-A-2 449 916**
**LU-A- 32 000**
**US-A-3 913 471**
**US-A-4 235 023**

(73) Patentinhaber: **ALPMA Alpenland**
**Maschinenbau Hain & Co. KG**
**D-8093 Rott am Inn (DE)**

(72) Erfinder: **Hain, Gottfried, Dipl.-Ing.**
**Lehen 53**
**D-8091 Ramerberg (DE)**
Erfinder: **Wulff, Bernd**
**Birkenriedweg 13**
**D-8209 Stephanskirchen (DE)**
Erfinder: **Stacheter, Johann**
**Lindenstrasse 13**
**D-8206 Bruckmühl (DE)**

(74) Vertreter: **Hain, Leonhard, Dipl.-Ing.**
**Tal 18/IV**
**D-8000 München 2 (DE)**

Courier Press, Leamington Spa, England.

**Beschreibung**

Die Erfindung betrifft eine Vorrichtung zum Behandeln von einer natürlichen Reifung unterliegenden Käsestücken gemäß dem Oberbegriff des Patentanspruches 1.

Mit fortschreitender technischer Entwicklung ist in der Praxis eine kontinuierliche Käsefertigung bekannt geworden, bei der entlang einer kontinuierlichen Transportstrecke (DE—A—1 931 818) die Käseformen mit Käsebruch gefüllt, die Käsemasse portioniert, entmolkt und zu Käsestücken ausgeformt wird. Die Käsestücke befinden sich dazu in Blockformen, die zu größeren Stapeln aufgestapelt werden. In diesen Blockformen-Stapeln entmolken die Käsestücke aber je nach ihrer Lage recht unterschiedlich, weil schon geringe Temperatur- und Feuchtigkeitsabweichungen sich ungünstig auswirken. Vor allem ein im Innern eines Stapels auftretender Wärmestau und die schnellere Abkühlung der Käsestücke an den Stapelrändern spielen hierbei eine wesentliche Rolle. Eine ungleichmäßige Entmolkung hat wiederum eine ungleiche Verfestigung der Käsemasse mit qualitativen und quantitativen Abweichungen zur Folge, so daß am Ende ungleich schwere, feste und große Käsestücke entstehen. Eine Verbesserung konnte zwar mit Blockformen (DE—A—2 449 916) erreicht werden, die zwischen den Formen durchgehende Belüftungskamine bilden. Jedoch konnten auch damit Temperaturunterschiede von 2 bis 3°C zwischen außen und innen nicht vermieden werden. Durch die DE—A—2 138 356 wurde bereits eine Einrichtung zum Abkühlen und Befeuchten von insbesondere portionierten und in Käseformen ausgeformten Käsestücken auf eine gewünschte Temperatur bekannt, um Unterschiede im Gewicht und in der Beschaffenheit weitgehend zu vermeiden. Dazu ist eine seitlich eines Käseformenstapels angeordnete Befeuchtungseinrichtung vorgesehen, in der ein Ventilator und eine Befeuchtungsdüse eingebaut sind und die über trichterförmige Leitbleche mit dem Hordenstapel in Verbindung steht. Zur Verstärkung der Kühlwirkung können auch unterhalb des Formenstapels Ventilatoren vorgesehen sein. Diese bekannte Abkühleinrichtung ist nur für eine stationäre Behandlung gestapelter Käsestücke geeignet. Da hierbei der Stapel frei steht, kann die Kühlluft bereits aus den vorderen Zwischenräumen zwischen den Formen nach außen entweichen, ohne die dahinterliegenden Käsestücke ebenfalls intensiv zu unströmen. Eine gleichmäßige Belüftung und damit Entmolkung aller Käsestücke in einem größeren Stapel ist mit dieser Einrichtung daher nicht gewährleistet. Zum Reifen, Pökeln und Garmachen von Lebensmittel ist eine Wärmekabine bekannt geworden (LU—A—32000), die aus einem allseits wärmeisolierenden Mauerwerk mit einer abschließbaren Öffnung zum Ein- und Ausschieben von mit dem Behandlungsgut bestückten Wagen besteht. Durch einen der Kabinen-Decke angebrachten Ventilator wird Warm- oder Heißluft im Umlauf gebracht und von oben und/oder unten durch das Behandlungsgut geführt, wobei zusätzliche Einspritzdüsen am Boden der Kabine zur Befeuchtung dieser Strömungsluft vorgesehen sind. Zwischenwände schirmen seitlich das zu behandelnde Gut gegenüber dem Umluftstrom ab, so daß ein unmittelbares Einwirken dieser Umluft im Randbereich ausscheidet. Ventilator und Kabinen-Decke sind auch nicht so ausgebildet, daß ein gleichmäßiger Luftstrom über den gesamten Kabinenquerschnitt gewährleistet ist. Ebenfalls ermöglicht diese Einrichtung keinen Durchschiebetransport der Hordenstapel zur Einordnung in eine Produktionsstrecke, wie auch keine Einrichtungen zur Abführung der während des Durchlaufs ablaufenden Molke vorhanden sind. Schließlich soll mit dieser bekannten Behandlungsmethode und -kabine der Reifungsprozeß von Lebensmitteln über eine lange Zeitdauer beeinflußt werden.

Der Erfindung liegt demgegenüber die Aufgabe zugrunde, eine Vorrichtung zum Behandeln von einer natürlichen Reifung unterliegenden Käsestücken mittels Luft zu schaffen, die eine wirksame und vor allem auch gleichmäßige Belüftung der Käsestücke innerhalb eines größeren Stapels von durch eine Produktionsstrecke bewegten Käsehorden gewährleistet.

Diese Aufgabe wird an einer Vorrichtung nach dem Oberbefriff des Patentanspruches 1 erfindungsgemäß durch die kennzeichnenden Merkmales dieses Patentanspruches gelöst.

Der erfindungsgemäße Belüftungstunnel eignet sich besonders für einen kontinuierlichen Durchlauf der Käsehordenstapel und daher zum Einsatz in einer Produktionsstrecke. Dadurch, daß die Hordenstapel rundum eingeschlossen sind und die Luft in diesem Tunnel von unten nach oben angesaugt wird, ergibt sich eine gleichmäßige Belüftung der Käsestücke auch im Innern eines größeren Stapels. Es hat sich nämlich gezeigt, daß ein Saugstrom im Stapel Unterdruck entstehen läßt, der auch das Abströmen der Luft aus Toträumen bewirkt. Diese Luftströmung streicht auch über die offenen Käseflächen von von Formen umschlossenen Käsestücken hinweg, so daß mit der erfindungsgemäßen Vorrichtung Käsestücke bereits unmittelbar nach ihrer Portionierung und noch während ihrer Entmolkung temperiert bzw. klimatisiert werden können, um auf diese Weise die Entmolkung und Verfestigung der Käsestücke gleichmäßig zu beeinflussen. Vor allem gelingt es nunmehr, die Temperatur innerhalb eines Formensatzes oder -stapels über den vollen Querschnitt gleichmäßig, d.h. also sowhol im Außen- als auch im Innenbereich abzusenken und dadurch für alle Käsestücke die gleichen Entwicklungsverhältnisse zu schaffen.

Weitere Merkmale der Erfindung sind in Unteransprüchen beansprucht.

Die Erfindung wird nachfolgend anhand von Ausführungsbeispielen, die auch in der Zeichnung schematisch dargestellt sind, näher beschrieben. Es zeigen:

Fig. 1 einen Vertikalschnitt durch einen Doppelbahn-Belüftungstunnel,

Fig. 2 eine Seitenansicht zur Fig. 1,

Fig. 3 einen Vertikalschnitt durch einen anderen Tunnel und

Fig. 4 eine Draufsicht hierzu.

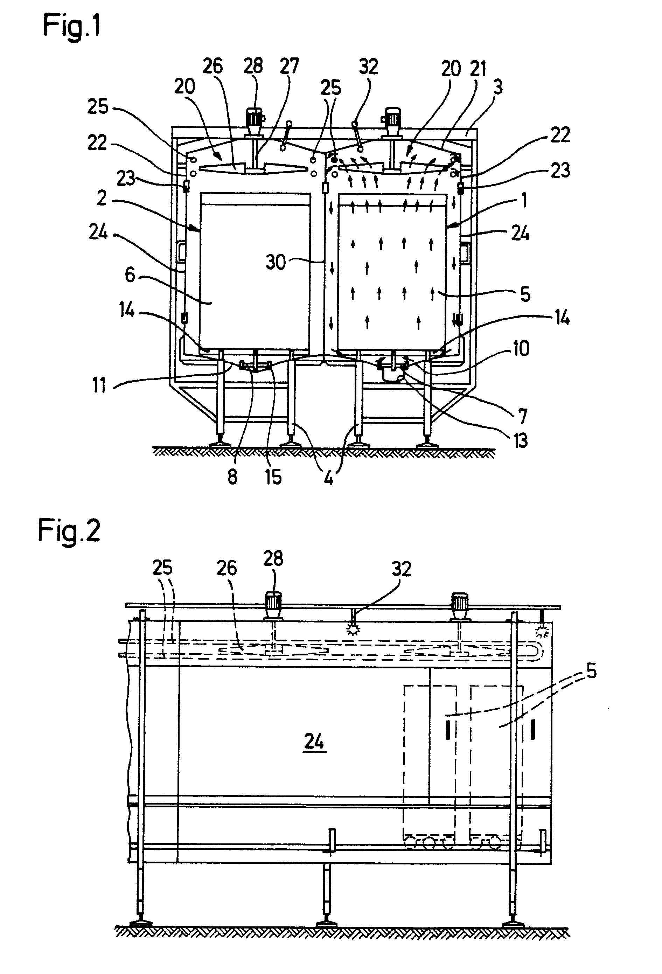

Der dargestellte Belüftungstunnel umfaßt zwei Transportbahnen, und zwar einen Vorschubtunnel 1 und einen Rückschubtunnel 2. Diese beiden Tunnelbahnen sind in gleicher Weise ausgebildet und durch einen Gestellrahmen 3 miteinander verbunden, wobei zu ihrer Abstützung noch die Stützfüße 4 vorgesehen sind. Zum Transport der Formenstapel 5,6 durch den Tunnel sind Zugstangen oder Mitnehmerketten 7,8 in einer Bodenmulde 10,11 vorgesehen, wobei die Bodenmulde des Vorschubtunnels wegen des Antriebs bei 13 vertiegt ist. Die Formenstapel sind zweckmäßig auf Stapelpaletten 14 mit rollen 15, die auf Schienen (nicht sichtbar) der Tunnelmulden 10,11 abrollen, gelagert, Aus Platzgründen hat es sich als zweckmäßig erwiesen, die meist länglichen Stapel in Querstellung durch die Tunnel zu transportieren. Jeder Tunnel 1,2 besteht aus einer Tunnelhaube 20 aus einer satteldachförmigen Decke 21 und den Seitenschürzen 22, in deren Gleitführungen 23 verschiebbare Innen wände 24 eingesetzt sind. In dieser Tunnelhaube befinden sich längs den Seitenschürzen 22 noch die Wärmetauscherrohre 25 sowie die Lüfterräder 26, die über Antriebswellen 27 von einem außenliegenden Antriebsmotor angetrieben sind. Wie Fig. 1 erkennen läßt, entspricht der Durchmesser dieser Lüfterräder 26 der Stapellänge 5 bzw. 6, so daß sich auch der durch die Lüfterräder bewirkte Ansaugstrom auf die gesamte Stapelfläche verteilt. Diese hochsteigende Luft wird durch das Satteldach zu den Seitenwänden 24 abgelenkt, wo sie die Wärmetauscherrohre 25, die je nach Bedarf mit Warm- oder Kaltwasser gefüllt sind, umströmt, hierauf nach unten und schließlich unten wieder in den Stapel eingeführt wird. Zusätzliche Leitwände (nicht gezeichnet) können zur Führung dieses Luftstromes vorgesehen sein.

Bei der Doppelbahn gemäß Fig. 1 sind die beiden Tunnel 1 und 2 ganz aneinander gerückt, so daß zur Trennung eine einzige Zwischenwand 30 genügt. An der Tunnelhaube angebrachte Sprühköpfe 32 dienen zur Reinigung des Tunnels.

Die Tunnel sind an den Stirnwänden durch flexible Vorhänge od.dgl. Durchschiebewände (nicht gezeichnet) begrenzt, so daß auch an diesen Seiten ein weitgehender Abschluß der Belüftungsräume gewährleistet ist.

Die Tunnel können beliebig lang sein. Für einen chargenweisen Betrieb, bei dem die Käsestapel eine vorbestimmte Zeit in einem Tunnel verweilen, können schon Längen von 5 m ausreichen. Für einen kontinuierlichen Durchzugbetrieb wird die Länge des Tunnels der notwendigen Verweildauer eines Stapels in einem Tunnel angepaßt sein. Wenn ein Vorschub- und ein Rückschubtunnel errichtet sind, verkürzt sich natürlich die Ausdehnung in einer Richtung. Es ist ferner zweckmäßig, wenn die quergestellten Käsestapel möglichst nahe aneinandergereiht sind, um eine gleichmäßige Luftdurchströmung infolge einer gleichmäßigen Beaufschlagung der Käsestapel zu erreichen.

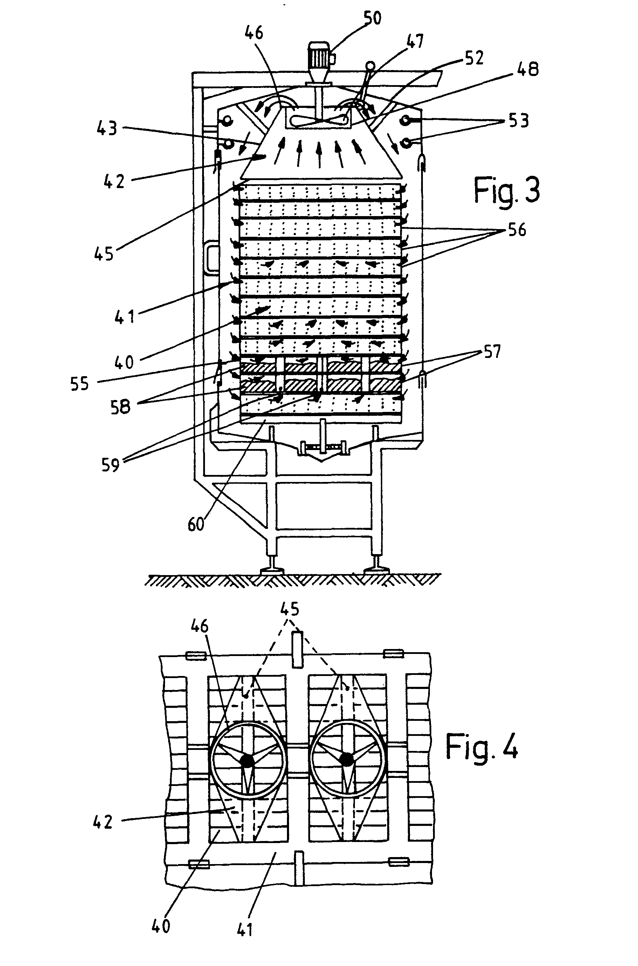

In den Figuren 3 oder 4 ist ein weiterer Belüftungstunnel für einen Blockformen-Stapel 40 dargestellt. Während der Tunnel 41 selbst ähnlich wie in den Figuren 1 oder 2 ausgebildet ist, ist in diesem Fall eine besonders intensiv wirkende Luftabsaughaube 42 vorgesehen. Diese besteht aus einem Gehäuse 43, das einen dicht oberhalb der Stapel endenden Ansaugschlitz 45 bildet und von dieser Rechteckform in eine kreisförmige Austrittsöffnung 46 übergeht. In dieser Austrittsöffnung befindet sich ein Lüfterrad 47 in einem Lüfterring 48. Zum Antrieb dient der aufgesetzte Motor 50. Die vom Lüfterrad durch den Ansaugschlitz aus dem darunter befindlichen Käsestapel angesaugte Luft tritt oben aus dem Lüfterring 48 aus und wird durch die Dachdecke 52 nach allen Seiten nach unten umgelenkt. Ein Teil diese Stromes wird durch die Wärmetauscherrohre 53 abgekühlt oder auch erwärmt. Die nach unten nachströmende Luft tritt auch durch die offenen Perforierungslöcher 55 in die Blockformen 56 ein, von denen die beiden Sätze 57 im Schnitt gezeichnet sind. Dabei streicht der Luftstrom über die abgefüllte Käsemasse 58 in den Formen hinweg und steigt dann in den zwischen den Blockformen gebildeten Kanälen 59 nach oben in die Absaughaube 42. Damit eine starke Luftströmung, die auch über die volle Stapelbreite möglichst gleichmäßig wirksam ist, zustande kommt, erstrecken sich die verhältnismäßig schmalen Ansaugschlitze 45 auf die volle Breite und wenn in einem Tunnel für jeden aufzunehmenden Stapel eine Abzugshaube vorhanden ist, dann wird jedes Käsestück während eines Tunneldurchlaufes häufig und intensiv belüftet. Diese vorbeschriebene Direktbelüftung der Käsemasse tritt vor allem dann ein, wenn die Stapel auf geschlossenen Unterlagen 60, die die Steigkanäle unten abschließen, errichtet sind.

Die Decke des Belüftungstunnels kann auch jede andere Form, die einer Strömungsumlenkung entgegenkommt, aufweisen. Es ist auch möglich, anstelle der Lüfterräder Absaugkanäle, die sich die gesamte Tunnellänge erstrecken, anzubringen. Wird der Belüftungstunnel, der auch fahrbar sein kann, nur zur Behandlung von fertig entmolkten, bereits reifenden Käsestücken eingesetzt, dann kann auf die Bodenmulde mit der Ablaufrinne verzichtet werden.

In der Regel wird eine einfache Erwärmung und/oder Kühlung der Behandlungsluft genügen. In den Tunnelabschnitten können auch unterschiedliche Temperaturen herrschen. Soll auch der Feuchtigkeitsgehalt der Umluft einstellbar sein, dann können zur Wasserausscheidung noch zusätzliche Bodenkühlrohre vorgesehen sein. Reicht die durch die Stirnwände beim Beschicken der Tunnels eintretende Frischluft nicht aus, dann kann eine zusätzliche Luftzufuhr, z.B. durch die Decke, eingerichtet sein. Dabei besteht auch die Möglichkeit, diese Zuluft mittels einer separaten Klimakammer entsprechend vorzubehandeln.

Auch wenn dieser Belüftungstunnel für jede Käseart und auch während jedes Entwicklungszustandes des Käses mit Vorteil eingesetzt werden kann, eignet er sich besonders zum Belüften bzw. Klimatisieren von frisch ausgeformten Käsestükken, die in Stapeln entlang einer Transportbahn geformt, verfestigt, entmolkt und eventuell auch wiederholt gewendet werden.

## Patentansprüche

1. Vorrichtung zum Behandeln von einer natürlichen Reifung unterliegenden Käsestücken, die in Blockformen oder auf mit Durchbrechungen versehenen Unterlagsplatten entmolkt, ausgeformt und zum Transport mehrlagig zu sogenannten Käsestapeln (5, 6, 40) aufeinandergestapelt sind, mit einer Einrichtung zum Erzeugen eines zur beschleunigten Entmolkung und Verfestigung der Käsestücke temperierten Luftstromes und zum Verteilen dieses Luftstromes auf den gesamten Käsestapel, mit einem Lüfterrad (2, 6, 47) zum Durchführen dieses Luftstromes durch die Zwischenräume der gestapelten Käsestücke sowie einer den Zu- und Abtransport der Käsestapel besorgenden Transportbahn (78), dadurch gekennzeichnet, daß entlang dieser Transportbahn (7, 8) ein Belüftungstunnel (1.2 bzw. 41) vorgesehen ist, der über dieser Transportbahn (7, 8) einen ober-, längs- und stirnseitig abgeschlossenen Luftumwälzraum bildet, der Belüftungstunnel (1, 2, 41) auch bodenseitig mittels einer Bodenmulde (10, 11) abgeschlossen ist, an der Decke (21, 52) des Belüftungstunnels (1, 2, 41) ein Lüfterrad (2, 6, 47) als Ansauggebläse angeordnet ist, das die Luft in einem weitgehend gleichmäßig verteilten Strom aus dem Käsestapel ansaugt, die Decke (21, 52) zum Umlenken der Ansaugluft entland den Belüftungstunnel Innenwänden (24) nach unten ausgebildet ist und an den Belüftungstunnel-Innenwänden (24) nahe dem Deckenansatz Wärmetauscherrohre (25, 53) zum Abkühlen bzw. Temperieren des Luftstromes angebracht sind.

2. Vorrichtung nach Anspruch 1, dadurch gekennzeichnet, daß die Bodenmulde (10, 11) die Transportbahn (7, 8) in den Luftumwälzraum einschließt.

3. Vorrichtung nach Anspruch 1 oder 2, dadurch gekennzeichnet, daß das Ansauggebläse von einem Lüfterrad (26), dessen Durchmesser etwa der horizontalen Stapelausdehnung quer zur Transportrichtung entspricht, gebildet ist.

4. Vorrichtung nach einem der Ansprüche 1 bis 3, dadurch gekennzeichnet, daß die Decke (21, 52) des Belüftungstunnels (1, 2 bzw. 41) gewölbt oder satteldachförmig ausgebildet ist.

5. Vorrichtung nach einem der Ansprüche 1, 2 oder 4, dadurch gekennzeichnet, daß das Ansauggebläse von einem Lüfterrad (47) und einer Ansaughaube (42) mit einem schmalen, auf die Stapelbreite ausgedehnten Ansaugschlitz (45) sowie einer kreisförmigen Austrittsöffnung (46) gebildet ist.

6. Vorrichtung nach Anspruch 5, dadurch gekennzeichnet, daß das Lüfterrad (47) von einem Lüfterring (48) umgeben ist.

7. Vorrichtung nach einem der Ansprüche 1 bis 6, dadurch gekennzeichnet, daß an den Tunnel-Innenwänden (24) Leitflächen zur Lenkung des Luft-Rückstromes vorgesehen sind.

8. Vorrichtung nach einem der Ansprüche 1 bis 7, dadurch gekennzeichnet, daß der Belüftungstunnel eine als eine Baueinheit ausgebildete Tunnelhaube (20) aus Decke (21) und Seitenschürzen (22) umfaßt, in der das Ansauggebläse und die wärmetauscherrohre (25) untergebracht sind.

9. Vorrichtung nach einem der Ansprüche 1 bis 8, dadurch gekennzeichnet, daß die Käsestückstapel (40) auf geschlossenen Unterlagen (60) errichtet sind.

10. Vorrichtung nach einem der Ansprüche 1 bis 9, dadurch gekennzeichnet, daß der Belüftungstunnel aus einem Vorschubtunnel (1) und einem unmittelbar daran angebauten, in umgekehrter Richtung befahrbaren Rückschubtunnel (2) besteht.

## Revendications

1. Dispositif pour le traitement de pièces de fromage soumises à un mûrissement naturel qui sont égouttées, formées et empilées les unes sur les autres en couches multiples en ce que l'on appelle des piles de fromage (5, 6, 40) en vue du transport, en forme de blocs ou sur des plaques de support comportant des orifices, qui comprend un dispositif destiné à engendrer un courant d'air tempéré pour accélérer l'égouttage et solidifier les pièces de fromage et pour répartir ce courant d'air sur toute la pile de fromage, une roue de ventilateur (26, 47) destinée à amener ce courant d'air à travers les espaces intermédiaires des pièces de fromage empilées ainsi qu'une voie de transport (7, 8) afin d'effectuer le transport d'entrée et de sortie des piles de fromage, caractérisé en ce que, le long de cette voie de transport (7, 8) est prévu un tunnel d'aération (1, 2 ou 41) qui constitue au-dessus de cette voie de transport (7, 8) un espace de circulation d'air fermé sur les côtés supérieurs, longitudinaux et frontaux, le tunnel d'aération (12, 41) étant également fermé sur le côté de fond au moyen d'une auge de fond (10, 11), sur la voûte (21, 52) du tunnel d'aération (1, 2, 41) est disposée une roue de ventilateur (26, 47) en tant que soufflante d'aspiration, qui aspire l'air à partir des piles de fromage en un courant réparti de façon largement uniforme, la voûte (21, 52) est constituée pour dévier vers le bas l'air aspiré le long des parois intérieures (24) du tunnel d'aération, et des tubes échangeurs de chaleur (25, 53) sont disposés sur les parois intérieures (24) du tunnel d'aération près de l'appendice de voûte pour refroidir ou tempérer le courant d'air.

2. Dispositif selon la revendication 1, caractérisé en ce que l'auge de font (10, 11) enferme la voide de transport (7, 8) dans l'espace de circulation d'air.

3. Dispositif selon la revendication 1 ou 2, caractérisé en ce que la soufflante d'aspiration est constituée par une roue de ventilateur (26) dont le diamètre correspond à peu près à l'étendue horizontale des piles transversalement à la direction de transport.

4. Dispositif selon l'une des revendications 1 à 3, caractérisé en ce que la voûte (21, 52) du tunnel d'aération (1, 2 ou 41) est cintrée ou en forme de toiture à deux versants.

5. Dispositif selon l'une des revendications 1, 2 ou 4, caractérisé en ce que la soufflante d'aspiration est constituée d'une roue de ventilateur (47) et d'une hotte d'aspiration (42) comportant une petite fente d'aspiration (45) répartie sur la largeur des piles, ainsi qu'un orifice de sortie circulaire (46).

6. Dispositif selon la revendication 5, caractérisé en ce que la roue de ventilateur (47) est entourée par un anneau de ventilateur (48).

7. Dispositif selon l'une des revendications 1 à 6, caractérisé en ce que des surfaces directrices sont prévues sur les parois intérieures (24) de tunnel pour diriger le flux de retour de l'air.

8. Dispositif selon l'une des revendications 1 à 7, caractérisé en ce que le tunnel d'aération comprend une hotte de tunnel (20) constituée sous forme d'unité modulaire, comportant une voûte (21) et des tabliers latéraux (22), dans laquelle sont disposés la soufflante d'aspiration et les tubes échangeurs de chaleur (25).

9. Dispositif selon l'une des revendications 1 à 8, caractérisé en ce que les piles (40), de portions de fromage sont dressées sur des supports fermés (60).

10. Dispositif selon l'une des revendications 1 à 9, caractérisé en ce que le tunnel d'aération se compose d'un tunnel d'aménée (1) et d'un tunnel de retour (2) raccordé immédiatement au premier, qui peut être parcouru dans le sens inverse.

## Claims

1. Device for treating pieces of cheese being subjected to natural maturing which are drained and formed in block moulds or on bearing plates having openings and stacked upon each other in multiple layers to form so-called cheese stacks (5, 6, 40) for transportation purposes, having an equipment for producing a tempered air flow which accelerates the draining and solidifies the pieces of cheese and for distributing said air flow over the whole cheese stack, a blower wheel (26, 47) for guiding said air flow through the gaps between the stacked pieces of cheese and a conveyor (7, 8) for feeding and taken away the cheese stacks, characterized in that along said conveyor (7, 8) a ventilation tunnel (1, 2 or 41) is provided forming above said conveyor (7, 8) an air recirculation chamber sealed off against the top wall, its side wall and its front wall, the ventilation tunnel (1, 2, 41) is also sealed off against its bottom wall by means of a bottom trough (10, 11), at the cover (21, 52) of the ventilation tunnel is provided a blower wheel (26, 47) functioning as an induction blower inducting the air from the cheese stack as a substantially uniformly distributed flow, the cover (21, 52) is formed in such a way that the inducted air is diverted downwards along the inner walls (24) of the ventilation tunnel and at the inner walls (24) of the ventilation tunnel near the shoulder of the cover heat exchanger tubes (25, 53) are provided for cooling or tempering the air flow.

2. Device according to claim 1, characterized in that the bottom trough (10, 11) includes the conveyor (7, 8) leading to the air recirculation chamber.

3. Device according to claim 1 or 2, characterized in that the induction blower is formed by a blower wheel (26) whose diameter approximately corresponds to the horizontal extent of the stack transversely to the direction of transportation.

4. Device according to one of the claims 1 to 3, characterized in that the cover (21, 52) of the ventilation tunnel (1, 2 or 41) has the form of an arch or of a ridge roof.

5. Device according to one of the claims 1, 2 or 4, characterized in that the induction blower consists of a blower wheel (47) and an induction dome (42) having a narrow induction slot (45) extending along the width of the stack and a circular outlet opening (46).

6. Device according to claim 5, characterized in that the blower wheel (47) is surrounded by a blower ring (48).

7. Device according to one of the claims 1 to 6, characterized in that guide vanes for guiding back the flow of the air are provided at the inner walls (24) of the tunnel.

8. Device according to one of the claims 1 to 7, characterized in that the ventilation tunnel comprises a tunnel dome (20) formed as one construction unit from the cover (21) and the lateral aprons (22), where the induction blower and the heat exchanger tubes (25) are accommodated.

9. Device according to one of the claims 1 to 8, characterized in that the stacks (40) of cheese pieces are erected on closed bases (60).

10. Device according to one of the claims 1 to 9, characterized in that the ventilation tunnel consists of a forward feed tunnel (1) and a return tunnel (2) which is built immediately against the forward feed tunnel and can be passed in opposite direction.

Fig.1

Fig.2

Fig. 3

Fig. 4